(19) Europäisches Patentamt

European Patent Office

Office européen des brevets

(11) **EP 3 899 451 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **19824300.8**

(22) Anmeldetag: **17.12.2019**

(51) Internationale Patentklassifikation (IPC):
**G01F 1/84** *(2006.01)*      **G01F 15/02** *(2006.01)*

(52) Gemeinsame Patentklassifikation (CPC):
**G01F 1/8477; G01F 15/024;** G01F 1/8422

(86) Internationale Anmeldenummer:
**PCT/EP2019/085514**

(87) Internationale Veröffentlichungsnummer:
**WO 2020/127173 (25.06.2020 Gazette 2020/26)**

(54) **VIBRONISCHER MESSAUFNEHMER MIT MINDESTENS ZWEI TEMPERATURSENSOREN**

VIBRONIC MEASUREMENT SENSOR HAVING AT LEAST TWO TEMPERATURE SENSORS

ENREGISTREUR DE MESURE VIBRATOIRE AVEC AU MOINS DEUX SONDES DE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2018   DE 102018132672**

(43) Veröffentlichungstag der Anmeldung:
**27.10.2021   Patentblatt 2021/43**

(73) Patentinhaber: **Endress + Hauser Flowtec AG 4153 Reinach (CH)**

(72) Erfinder:
• **RIEDER, Alfred**
  **84032 Landshut (DE)**
• **KUMAR, Vivek**
  **4123 Allschwil (CH)**
• **HUBENSTEINER, Josef**
  **85354 Freising (DE)**
• **ALIOLI, Mattia**
  **4102 Binningen (CH)**

(74) Vertreter: **Hahn, Christian et al Endress+Hauser Group Services (Deutschland)AG +Co. KG Colmarer Straße 6 79576 Weil am Rhein (DE)**

(56) Entgegenhaltungen:
WO-A1-2008/064459      WO-A1-2018/007176
US-A1- 2011 113 896      US-A1- 2013 139 613

• **Vivek Kumar ET AL: "Numerical simulations of Coriolis flow meters for low Reynolds number flows", MAPAN, Bd. 26, Nr. 3 2011, Seiten 225-235, XP055676306, India DOI: 10.1007/s12647-011-0021-6 Gefunden im Internet: URL:https://link.springer.com/article/10.1007/s12647-011-0021-6 [gefunden am 2020-03-12]**

**Beschreibung**

Die vorliegende Erfindung betrifft einen vibronischen Messaufnehmer mit mindestens zwei Temperatursoren zum Bestimmen mindestens eines physikalischen Parameters eines strömungsfähigen Mediums, wobei der physikalische Parameter insbesondere die Temperatur, die Dichte, die Massedurchflussrate und die Viskosität des Mediums umfassen kann. Die in Rede stehenden Messaufnehmer werden in den meisten Fällen als Coriolis-Massedurchflussmesser konzipiert, die neben der Massedurchflussrate auch die Temperatur, die Dichte bzw. die Viskosität eines Mediums erfassen können. Insofern als einerseits die Dichte, der Massedurchfluss und die Viskosität eines Mediums Temperaturabhängig sind, und andererseits die elastischen Eigenschaften eines vibronischen Messaufnehmers temperaturabhängig sind, ist eine Messung der Medientemperatur bei gattungsgemäßen Messaufnehmern üblich.

Die Offenlegungsschriften WO 2018 007 176 A1 und DE 10 2017 106 209 A1 offenbaren beispielsweise einen Messaufnehmer mit einem ersten Temperatursensor an einem ersten Messrohr und einem zweiten Temperatursensor an einem zweiten Messrohr, wobei die beiden Temperatursensoren in Längsrichtung der Messrohre gegeneinander versetzt sind. Die Temperatursensoren sind insbesondere an den einander abgewandten Außenseiten der parallel zueinander verlaufenden Messrohre angeordnet.

Die Offenlegungsschrift WO 2008 064 459 A1 offenbart ein Leeküberwachungssystem, mit einem vibronischen Durchflussmessgerät, bei dem ein Massenström in entgegengesetzten Richtungen durch gegeneinander schwingende parallele Messrohre fließt. Bei solange keine Leckage vorliegt, führt ein identischer Massestrom in beiden Messrohren zu einem Nullsignal. Zur Verbesserung der Messgenauigkeit ist für jede Strömungsrichtung mindestens ein Temperatursensor vorgesehen.

Untersuchungen im Zusammenhang mit der vorliegenden Erfindung haben ergeben, dass sich bei kleinen Reynoldszahlen, beispielsweise Re < 300 und einem Temperaturgradienten zwischen dem Medium und der Umgebung des Messaufnehmers je nach Einbaulage des Messaufnehmers eine über die Messrohrquerschnitte inhomogene Temperaturverteilung in den Messrohren ausbildet. Damit besteht die Gefahr, dass Temperaturmesswerte abhängig von der Einbaulage des Messaufnehmers und der Position der Temperatursensoren beeinflusst werden mit entsprechenden Auswirkungen auf die Korrektur von Temperatureinflüssen bei der Bestimmung der physikalischen Parameter.

Es ist daher die Aufgabe der vorliegenden Erfindung einen vibronischen Messaufnehmer bereitzustellen, der eine verbesserte Messgenauigkeit bei inhomogenen Temperaturverteilungen aufweist. Die Aufgabe wird erfindungsgemäß gelöst durch den vibronischen Messaufnehmer gemäß dem unabhängigen Patentanspruch 1.

Der erfindungsgemäße vibronische Messaufnehmer zum Bestimmen des mindestens einen physikalischen Parameters eines strömungsfähigen Mediums, umfasst: mindestens einen Oszillator, der ein erstes, in Ruhelage gebogenes Messrohr zum Führen des Mediums und ein zweites, in Ruhelage gebogenes Messrohr zum Führen des Mediums sowie mindestens einen ersten Koppler und einen zweiten Koppler aufweist, wobei die Messrohre mittels des ersten Kopplers und des zweiten Kopplers miteinander verbunden sind, wobei sich zwischen den Kopplern jeweils ein schwingfähiger Abschnitt der Messrohre erstreckt;

mindesten einen Erreger zum Anregen mindestens einer Biegeschwingungsnutzmode des Oszillators, bei welcher die schwingfähigen Abschnitte der Messrohre gegeneinander schwingen;

mindesten einen Schwingungssensor zum Erfassen von Schwingungen des Oszillators, zumindest in der Biegeschwingungsnutzmode, und zum Ausgeben von schwingungsabhängigen Signalen;

einen ersten Temperatursensor, der am ersten Messrohr angeordnet ist, um ein erstes Temperaturmesssignal auszugeben, das von einer Temperatur an einem ersten von dem ersten Temperatursensor kontaktierten Oberflächenabschnitt des ersten Messrohrs abhängt;

einen zweiten Temperatursensor, der am zweiten Messrohr angeordnet ist, um ein zweites Temperaturmesssignal auszugeben, das von einer Temperatur an einem zweiten von dem zweiten Temperatursensor kontaktierten Oberflächenabschnitt des zweiten Messrohrs abhängt; und

eine Betriebs- und Auswerteschaltung zum Treiben des Erregers, zum Empfangen der schwingungsabhängigen Signale des Schwingungssensors sowie des ersten und zweiten Temperaturmesssignals sowie zum Bestimmen einer Schwingungsfrequenz zumindest einer Biegeschwingungsnutzmode des Oszillators anhand der schwingungsabhängigen Signale des Schwingungssensors und zum Bestimmen des mindestens einen physikalischen Parameters des Mediums in Abhängigkeit einer für den Parameter charakteristischen Schwingungseigenschaft des Oszillators sowie von dem ersten und zweiten Temperaturmesssignal;

wobei der Messaufnehmer eine zwischen den beiden Messrohren verlaufende Längssymmetrieebene ($S_{yz}$) aufweist, bezüglich welcher die beiden Messrohre zumindest zwischen dem ersten Koppler und dem zweiten Koppler zueinander symmetrisch verlaufen,

wobei der Messaufnehmer eine senkrecht zur Längssymmetrieebene ($S_{yz}$) verlaufende Quersymmetriebene ($S_{xy}$) aufweist, bezüglich welcher die beiden Messrohre zumindest zwischen dem ersten Koppler und dem zweiten Koppler jeweils einen spiegelsymmetrischen Verlauf aufweisen;

wobei ein erster Flächenschwerpunkt des ersten Oberflächenabschnitts und ein zweiter Flächenschwerpunkt des zweiten Oberflächenabschnitts bezüglich einer Schnittgeraden (y) zwischen der Längssymmetrieebene ($S_{yz}$) und der Quersymmetrieebene ($S_{xy}$) zueinander rotationssymmetrisch sind;

wobei die Temperatursensoren beabstandet zur Quersymmetrieebene angeordnet sind;

wobei der erste Flächenschwerpunkt in einer senkrecht zu einer Messrohrmittenline des ersten Messrohrs verlaufenden ersten Schnittebene liegt, wobei in der ersten Schnittebene eine Winkelkoordinate $\theta$ bezüglich des Schnittpunkts der Messrohrmittenlinie mit der ersten Schnittebene definiert ist, wobei ein Vektor, der in Richtung $\theta = 0°$ zeigt, ausgehend vom Schnittpunkt der Messrohrmittenlinie mit der ersten Schnittebene in Richtung der Längssymmetrieebene ($S_{yz}$) zeigt und senkrecht zu dieser verläuft, wobei ein Vektor, der in Richtung $\theta = 90°$ zeigt, ausgehend vom Schnittpunkt der Messrohrmittenlinie mit der ersten Schnittebene von der Quersymmetrieebene ($S_{xy}$) weg zeigt;

wobei erfindungsgemäß der erste Flächenschwerpunkt bezüglich des Schnittpunks der Messrohrmittenlinie in Richtung eines Winkels im Bereich von $\theta = 310°$ +/- 30° angeordnet ist.

In einer Weiterbildung der Erfindung ist der erste Flächenschwerpunkt bezüglich des Schnittpunks der Messrohrmittenlinie in Richtung eines Winkels im Bereich von $\theta = 310°$ +/- 20°, insbesondere $\theta = 310°$ +/- 10° angeordnet.

Die Temperatursensoren können an den schwingfähigen Abschnitten oder auch außerhalb der schwingfähigen Abschnitte angeordnet sein.

In einer Weiterbildung der Erfindung weist die Messrohrmittenlinie des ersten Messrohrs zwischen dem ersten Koppler und dem zweiten Koppler eine Länge I auf, wobei die erste Schnittebene vom ersten Koppler einen Abstand a aufweist, für den gilt $a/I \leq 0,25$, beispielsweise $a/I < 0,15$, insbesondere $a/I \leq 0,08$.

In einer Weiterbildung der Erfindung weist die Messrohrmittenlinie des ersten Messrohrs zwischen dem ersten Koppler und dem zweiten Koppler eine Länge I auf, wobei die erste Schnittebene vom ersten Koppler einen Abstand a aufweist, für den gilt $a/I \geq 0,01$, beispielsweise $a/I \geq 0,02$, insbesondere $\geq 0,04$.

In einer Weiterbildung der Erfindung beträgt die Länge des bogenförmigen Abschnitts nicht weniger als 30%, insbesondere nicht weniger als 35% und bevorzugt nicht weniger als 40% der Länge I.

In einer Weiterbildung der Erfindung weisen die schwingfähigen Abschnitte der beiden Messrohre jeweils zwei gerade Abschnitt und einen zwischen ihnen liegenden bogenförmigen Abschnitt auf, wobei die erste Schnittebene die Messrohrmittenlinie in einem geraden Abschnitt schneidet.

In einer Weiterbildung der Erfindung weisen die Messrohre jeweils einen Innendurchmesser von nicht weniger als 10 mm insbesondere nicht weniger als 12 mm und bevorzugt nicht weniger als 15 mm auf.

In einer Weiterbildung der Erfindung umfasst der vibronische Messaufnehmer weiterhin einen Trägerkörper; und mindestens einen dritten Temperatursensor zum Erfassen einer Temperatur des Trägerkörpers, und zum Ausgeben eines die Temperatur des Trägerkörpers repräsentierenden dritten Temperaturmesssignals; wobei die Messrohre einlaufseitig und auslaufseitig mit dem Trägerkörper biegesteif verbunden sind; wobei die Betriebs- und Auswerteschaltung dazu eingerichtet ist, das dritte Temperaturmesssignal zu empfangen und dieses bei der Ermittlung des mindestens einen physikalischen Parameters des Mediums zu berücksichtigen.

In einer Weiterbildung der Erfindung umfasst der mindestens eine physikalische Parameter eine Dichte $\rho$ des Mediums, wobei die für den Parameter charakteristischen Schwingungseigenschaft des Oszillators eine Schwingungsfrequenz $f_i$ des Oszillators bei der Resonanz einer Biegeschwingungsmode ist.

Die Dichte $\rho$ des Mediums kann insbesondere berechnet werden gemäß:

$$\rho = C_{0i} + C_{1i}\, f_i^{-2} + C_{2i}\, T_m\, f_i^{-2} + C_{3i}\, T_3\, f_i^{-2},$$

wobei die $C_{ji}$ modenspezifische Koeffizienten sind, $T_m$ eine mittlere Medientemperatur auf Basis der ersten und zweiten Temperaturmesssignale bezeichnet und $T_3$ eine Temperatur des Trägerkörpers auf Basis zumindest des dritten Temperaturmesssignals bezeichnet.

In einer Weiterbildung der Erfindung umfasst der mindestens eine physikalische Parameter eine Massedurchflussrate des Mediums, wobei die für den Parameter charakteristischen Schwingungseigenschaft des Oszillators eine Phasendifferenz bzw. Zeitdifferenz $\Delta t$ zwischen den Signalen eines einlassseitigen Schwingungssensors und eines auslassseitigen Schwingungssensors umfasst.

Der Massedurchfluss $\dot{m}$ des Mediums kann insbesondere berechnet werden gemäß:

$$\dot{m} = Cal\, \frac{1}{1 + k_m T_m + k_3 T_3}\, \Delta t - Zer$$

wobei Cal und Zer Kalibrierfaktoren sind, $k_m$ und $k_3$ Temperaturkorrekturkoeffizienten sind, $T_m$ eine mittlere Medientemperatur auf Basis der ersten und zweiten Temperaturmesssignale bezeichnet und $T_3$ eine Temperatur des Trägerkörpers auf Basis zumindest des dritten Temperaturmesssignals bezeichnet.

In einer Weiterbildung der Erfindung umfasst der mindestens eine physikalische Parameter eine Viskosität $\eta$ des Mediums, wobei die für den Parameter charakteristische Schwingungseigenschaft eine Dämpfung D und eine Schwingungsfrequenz $f_i$ der Schwingung bei der Resonanz einer Biegeschwingungsmode umfasst. Die Dämpfung D kann auf verschiedene Weisen ermittelt werden, beispielsweise:

• Anhand eines Verhältnisses zwischen einem Erregersignal zum Anregen einer Biegeschwingungsmode einerseits, und der Amplitude der Biegeschwingungsmode andererseits;

• einem Amplitudenverhältnis von Schwingungen bei einer Resonanzfrequenz einer Biegeschwingungsnutzmode und einer Schwingung außerhalb der Resonanz;

• oder der Beziehung zwischen der Phasenverschiebung $\varphi$ zwischen der Schwingungsamplitude zum Erregersignal und der Schwingungsfrequenz f, insbesondere einer der Ableitungen $d\varphi/df$ bzw. $df/d\varphi$ bei einer Resonanzfrequenz $f_{res}$.

Die Viskosität $\eta$ des Mediums kann insbesondere berechnet werden gemäß:

$$\eta = A_1 \frac{1}{\rho\, f_i^3} \left( D \frac{1}{1 + d_m T_m + d_3 T_3} - A_0 \right)^2$$

wobei die $A_i$ Kalibrierfaktoren sind, $d_m$ und $d_3$ Temperaturkorrekturkoeffizienten sind, $T_m$ eine mittlere Medientemperatur auf Basis der ersten und zweiten Temperaturmesssignale bezeichnet und $T_3$ eine Temperatur des Trägerkörpers auf Basis zumindest des dritten Temperaturmesssignals bezeichnet.

Mit den erfindungsgemäß angeordneten Temperatursensoren ist die erzielte Messgenauigkeit bei der Ermittlung der genannten physikalischen Parameter weitgehend unabhängig von der Einbaulage, auch wenn bei niedrigen Reynoldszahlen und Vorliegen eines Temperaturgradienten zwischen Medium und Umgebung inhomogene Temperaturverteilungen über die Messrohrquerschnitte ausgebildet werden. Insofern umfasst die Erfindung auch das Verwenden des erfindungsgemäßen vibronischen Messaufnehmers zum Bestimmen des physikalischen Parameters bei kleinen Reynoldszahlen Re, wie einer Reynoldszahl Re < 500, beispielsweise Re < 200, insbesondere Re < 100.

Die Erfindung wird nun anhand der in den Figuren dargestellten Ausführungsbeispiele näher erläutert. Es zeigt:

Fig. 1: eine Seitenansicht eines erfindungsgemäßen Messaufnehmers;

Fig. 2: ein Koordinatensystem zur Beschreibung des erfindungsgemäßen Messaufnehmers;

Fig. 3: ein Koordinatensystem zur Beschreibung die Position von Temperatursensoren des erfindungsgemäßen Messaufnehmers, wobei die in der Zeichnung dargestellten dargestellten Sensorpositionen nicht erfindungsgemäß sind;

Fig. 4a: eine erste Temperaturverteilung in einem Querschnitt durch die Messrohre bei einer höheren Medientemperatur als in der Umgebung des Messumformers, dabei weist die x Achse in Richtung der Gravitation;

Fig. 4b: eine zweite Temperaturverteilung in einem Querschnitt durch die Messrohre bei einer niedrigeren Medientemperatur als in der Umgebung des Messumformers, dabei weist die x Achse in Richtung der Gravitation;

Fig. 5: ein Diagramm, welches den maximalen Dichte-Messfehlerbeitrag inhomogener Temperaturverteilungen bei einem Temperaturunterschied von 10 K zur Dichtemessung als Funktion der Reynoldszahl darstellt;

Fig. 6a: ein Diagramm, welches den Dichte-Messfehlerbeitrag inhomogener Temperaturverteilungen bei horizontal liegendem Messrohrbogen und einem Temperaturunterschied von +10 K zur Umgebung in Abhängigkeit von der Position der Temperatursensoren darstellt;

Fig. 6b: ein Diagramm, welches den Dichte-Messfehlerbeitrag inhomogener Temperaturverteilungen bei horizontal liegendem Messrohrbogen und einem Temperaturunterschied von -10 K zur Umgebung in Abhängigkeit von der Position der Temperatursensoren darstellt;

Fig. 7a: ein Diagramm, welches den Dichte-Messfehlerbeitrag inhomogener Temperaturverteilungen bei aufrecht stehendem Messrohrbogen und einem Temperaturunterschied von +10 K zur Umgebung in Abhängigkeit von der Position der Temperatursensoren darstellt;

Fig. 7b: ein Diagramm, welches den Dichte-Messfehlerbeitrag inhomogener Temperaturverteilungen bei aufrecht stehendem Messrohrbogen und einem Temperaturunterschied von -10 K zur Umgebung in Abhängigkeit von der Position der Temperatursensoren darstellt;

Fig. 7c: ein Diagramm, welches den Dichte-Messfehlerbeitrag inhomogener Temperaturverteilungen bei abwärts geführtem Messrohrbogen und einem Temperaturunterschied von +10 K zur Umgebung in Abhängigkeit von der Position der Temperatursensoren darstellt; und

Fig. 7d:ein Diagramm, welches den Dichte-Messfehlerbeitrag inhomogener Temperaturverteilungen bei abwärts geführtem Messrohrbogen und einem Temperaturunterschied von -10 K zur Umgebung in Abhängigkeit von der Position der Temperatursensoren darstellt.

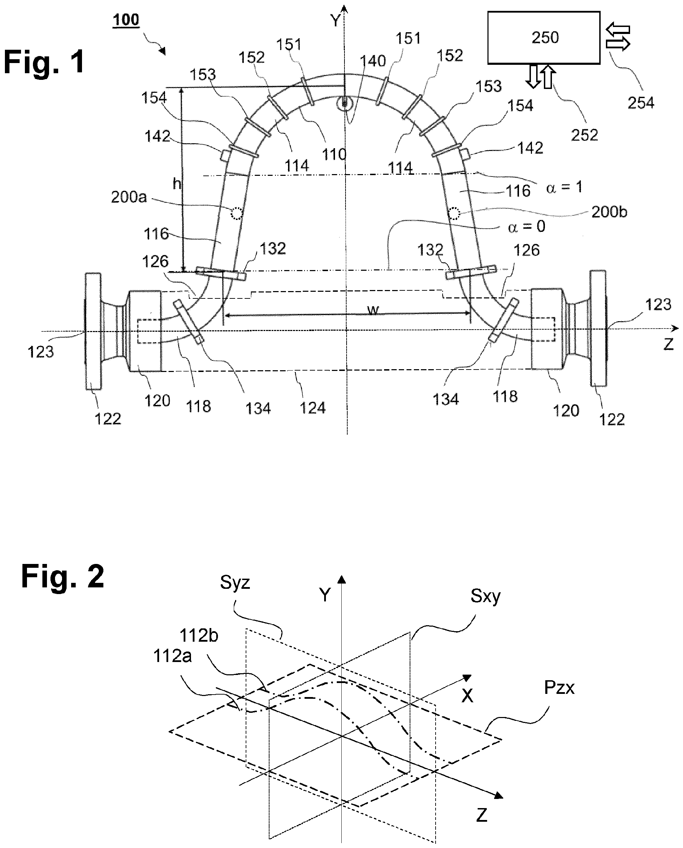

Das in Fig. 1 dargestellte Ausführungsbeispiel eines erfindungsgemäßen vibronischen Messaufnehmers, hier in Gestalt eines Coriolis-Massedurchflussmessaufnehmers bzw. Dichtemessaufnehmers 100 umfasst ein Paar von gebogenen Messrohren 110. Die Messrohre 110 erstrecken sich zwischen einem einlassseitigen Sammler 120 und einem auslassseitigen Sammler 120, und sind mit diesen fest verbunden, beispielsweise durch Einwalzen, Hartlöten oder Schweißen. Zwischen den Sammlern 120 erstreckt sich ein massives Trägerrohr 124, das mit beiden Sammlern fest verbunden ist, wodurch die Sammler 120 starr miteinander gekoppelt sind. Das Trägerrohr 124 weist an seiner Oberseite Öffnungen 126 auf, durch welche die Messrohre 110 von den Sammlern 120 aus dem Trägerrohr 124 heraus und wieder zurück geführt sind.

Die Sammler 120 weisen endständig jeweils einen Flansch 122 auf, mittels dessen das Coriolis-Massedurchflussmessaufnehmer bzw. Dichtemessgerät in einer Rohrleitung zu installieren ist. Durch zentrale Öffnungen 123 in den Flanschen 122 ist ein Massestrom eines Mediums durch die Rohrleitungen 110 zu führen, um den Massestrom bzw. dessen Dichte zu messen.

Bevor der detaillierte Aufbau und die Funktionsweise des erfindungsgemäßen Messaufnehmers 100 weiter erläutert werden, sollen kurz anhand von Fig. 2 einige Symmetrieeigenschaften vorgestellt werden. In Fig. 2 sind Messrohrmittelachsen 112a, 112b der beiden Messrohre 110 dargestellt, welche den Oszillator bilden. Die Messrohrmittelachsen 112a, 112b verlaufen symmetrisch zu einer ersten Längssymmetrieebene Syz, welche zwischen den Messrohren verläuft. Die Messrohrmittelachsen verlaufen weiterhin symmetrisch zu einer Quersymmetrieebene Sxy, welche senkrecht zur Längssymmetrieebene Syz verläuft. In der Quersymmetrieebene liegen Scheitelpunkte von Bögen der Messrohre bzw. der Messrohrmittelachsen.

Die Messrohrachsen 112a, 112b verlaufen vorzugsweise in Ebenen, die parallel zur ersten Spiegelebene verlaufen.

Bezüglich einer dritte Ebene Pzx, welche senkrecht zur Längssymmetrieebene und zur Quersymmetrieebene verläuft, und in welcher die Messrohrachsen 112a, 112b in den Sammlern verlaufen ist keine Symmetrie der Messrohre gegeben.

Die Schnittlinie zwischen der Längssymmetrieebene Syz und der Quersymmetrieebene definiert eine Y-Achse eines Koordinatensystems des Messaufnehmers. Die Schnittlinie zwischen der Quersymmetrieebene Sxy und der dritten Ebene Szx definiert eine X-Achse des Koordinatensystems, und die Schnittlinie zwischen der Längssymmetrieebene Syz und der dritten Ebene Pzx definiert die Z-Achse des Koordinatensystems. Mit den solchermaßen definierten Koordinaten wenden wir uns wieder Fig.1 zu.

Die Messrohre 110 bilden paarweise einen Oszillator, der insbesondere in einem Biegeschwingungsnutzmode anzuregen ist, bei dem die Messrohre gegenphasig zueinander in X-Richtung schwingen.

Zur Beeinflussung der Schwingungseigenschaften sind die Messrohre 110 einlassseitig und auslassseitig jeweils mit Kopplern 132, 134 verbunden, wobei durch die Position der beiden inneren der Koppler 132, also jener, welche einlassseitig bzw. auslassseitig jeweils am weitesten vom entsprechenden Sammler 120 entfernt sind, eine freie Schwingungslänge eines durch die beiden Messrohre 110 gebildeten Oszillators festgelegt ist. Diese freie Schwingungslänge hat großen Einfluss auf den Biegeschwingungsnutzmode des Oszillators, insbesondere auf dessen Eigenfrequenz, mit welcher der Oszillator vorzugsweise anzuregen ist.

Äußere Koppler 134, die jeweils zwischen den inneren Knotenplatten 132 und den Sammlern 120 angeordnet sind, dienen insbesondere dazu, weitere Schwingungsknoten zu definieren, um einerseits die mechanischen Maximalspannungen an den schwingenden Messrohren zu reduzieren, und andererseits das Auskoppeln von Schwingungsenergie in eine Rohrleitung, in welcher der Messaufnehmer 100 montiert ist, bzw. das Einkoppeln von Störschwingungen aus der Rohrleitung zu minimieren.

Zum Anregen von Biegeschwingungen der Messrohre in X-Richtung ist - bezogen auf die Längsrichtung bzw. die Z-Achse in der Mitte der Messrohre 110 des Messaufnehmers 100 - zwischen den beiden Messrohren110 eine Erregeranordnung 140 vorgesehen, beispielsweise eine induktive Erregeranordnung, die beispielsweise eine Tauchspule an einem Messrohr und einen Tauchkörper am gegenüberliegenden Messrohr umfasst. Der durch die beiden Messrohre gebildete Oszillator ist vorzugsweise mit seiner aktuellen Eigenfrequenz anzuregen. Zum Erfassen der Schwingungen der Messrohre sind in Längsrichtung symmetrisch zur Erregeranordnungen 140 Sensoranordnungen 142 vorgesehen, die jeweils als induktive Anordnung mit einer Tauchspule an einem Rohr und einem Tauchkörper am anderen Rohr gestaltet sind. Einzelheiten dazu sind dem Fachmann bekannt, und brauchen hier nicht näher erläutert zu werden.

Die Messrohre 110 weisen jeweils zwei bezüglich der Quersymmetrieebene zueinander symmetrische erste gebogene Abschnitte 114 auf. An den ersten gebogenen Abschnitt 114 schließt jeweils ein gerader Abschnitt 116 an, an den wiederum ein jeweils ein zweiter gebogener Abschnitt 118 anschließt, dessen Krümmungsradius hier etwa zwei Drittel des Krümmungsradius des erste gebogenen Abschnitts 114 beträgt.

Die zweiten gebogenen Abschnitte 118 verlaufen jeweils durch eine der Öffnungen 126 in dem Trägerrohr 124 und münden in einen der Sammler 120.

Die ersten gebogenen Abschnitte 114 weisen ringförmige Versteifungskörper 151, 152, 153, 154 auf, mit denen die Querempfindlichkeit der Parameter Massedurchflussrate und Dichte gegenüber dem Druck verringert wird.

Zur Bestimmung der Dichte oder der Massedurchflussrate ist die Temperatur der Messrohre 110 bzw. des in den Messrohren strömenden Mediums möglichst genau zu erfassen. Zwar würde eine Vielzahl von Temperatursensoren an jedem der Messrohre das prinzipiell ermöglichen, aber dieser Ansatz ist einerseits zu teuer, und andererseits sollten zusätzliche Massen an den Messrohren möglichst vermieden werden. Daher ist an jedem der beiden Messrohre 110 nur ein Temperatursensor 200a, 200b angeordnet, wobei die Temperaturen durch Kleben, (Punkt-)Schweißen oder Löten am Messrohr befestigt sein können oder mit einer Spannvorrichtung gegen einen Oberflächenbereich der Mantelfläche der Messrohre gespannt werden.

Ein dritter Temperatursensor, der hier nicht dargestellt ist, kann am Trägerkörper angeordnet sein, um eine repräsentive Temperatur des Trägerrohrs zu erfassen.

Wie in Fig. 1 schematisch dargestellt, umfasst der erfindungsgemäß Messaufnehmer 100 weiterhin eine Betriebs- und Auswerteschaltung 250, welche dazu eingerichtet ist über erste Schnittstellen 252, den Schwingungserreger 140 zu treiben, die Signale der Schwingungssensoren 142 und der Temperatursensoren 200a, 200b sowie ggf. weiterer Sensoren zu empfangen und anhand der Signale mindestens einen physikalischen Parameter, wie Temperatur, Dichte, Massedurchflussrate, und/oder Viskosität eines in den Messrohren befindlichen Mediums zu berechnen, und über zweite Schnittstellen 254 an ein Leitsystem auszugeben.

Ein erster Freiheitsgrad zur Positionierung der ersten und zweiten Temperatursensoren 100a, 100b ist die Position in Richtung der Messrohrmittenlinien 112a, 112b. Eine Position Nahe einem der Koppler 132, 134 ist insoweit problematisch, als die Koppler eine große Wärmekapazität haben und damit eine schnelle Reaktion der Temperatursensoren auf eine veränderte Medientemperatur beeinträchtigen können, beabstandet zu den Kopplern können die Temperatursensoren erstens jeweils zwischen einem der inneren Koppler 132 und dem benachbarten äußeren Koppler 134 angeordnet werden, oder zweitens jeweils zwischen dem inneren Koppler 132 und der Quersymmetrieebene. Bei der derzeit bevorzugten zweiten Alternative ist jedoch zu beachten, dass der Beitrag der Masse des Temperatursensors zum Trägheitsmoment des Oszillators mit zunehmendem Abstand zum inneren Koppler 132 steigt und infolge zunehmender Schwingungsamplituden unerwünschte Dämpfungseffekte ansteigen. Daher bleibt im vorliegenden Ausführungsbeispiel der Bereich betrachteter Positionen für die Temperatursensoren 200a, 200b auf die geraden Abschnitte 116 beschränkt, wobei für die Temperatursensoren 200a, 200b eine Abstandskoordinate $\alpha$ von den inneren Kopplern definiert ist, die direkt an den inneren Kopplern 132 den Wert 0 aufweist und am oberen Ende der geraden Abschnitte den Wert 1 annimmt.

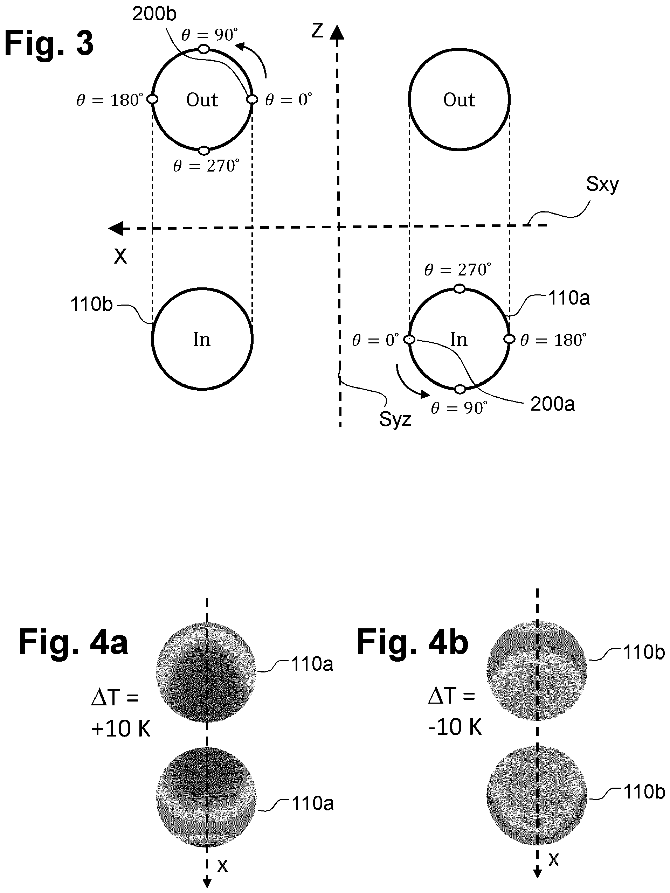

Ein zweiter Freiheitsgrad ist die Position der Temperatursensoren 200a, 200b, entlang des Umfangs der Messrohre 110a, 110b. Erfindungsgemäß sollen die Temperatursensoren zueinander symmetrisch bezüglich der Längssymmetrieebene Syz und der Quersymmetrieebene Sxy angeordnet sein. Diese Symmetrie ist in dem Koordinatensystem in Fig. 3 berücksichtigt, welche Messrohrquerschnitte zeigt, in denen die Temperatursensoren 200a, 200b angeordnet sind. Hierbei ist zu beachten, dass Fig. 3 lediglich ein Koordinatensystem zur Beschreibung der Positionen der Temperatursensoren zeigt, nicht aber die erfindungsgemäßen Positionen, Mit der Festlegung eines Winkels $\theta$, der die Position eines ersten Temperatursensors 200a auf dem Umfang des Messrohrs 110a definiert, ist aufgrund der Symmetriebedingungen auch die Position des zweiten Temperatursensors 200b am zweiten Messrohr 100b festgelegt. In Fig. 3 ist der erste Temperatursensor 200a einlaufseitig am in Strömungsrichtung rechts positionierten ersten Messrohr 100a angeordnet. Selbstverständlich könnte ein einlaufseitiger Temperatursensor stattdessen auch am in Strömungsrichtung linken Messrohr angeordnet sein, verbunden mit einer der obigen Symmetriebedingung genügenden Positionierung eines auslaufseitigen Temperatursensors.

Die Frage der Sensorposition ist insbesondere bei kleinen Reynoldszahlen beachtlich, da in diesem Regime ausgeprägt inhomogene Temperaturverteilungen entstehen können. In Fign. 4a und 4b, sind Simulationsergebnisse zu Temperaturverteilung in den Messrohren hinter dem einlaufseitigen Sammler dargestellt für eine Strömung mit Re = 20 und einem Temperaturunterschied von + 10 K bzw. - 10 K gegenüber der Umgebung. Die Schwerkraft wirkt dabei in Richtung -X, d.h. Der Messaufnehmer ist zur Seite geneigt und die Messrohrbogen verlaufen horizontal. Es wird ersichtlich, dass, abhängig von der Position der Temperatursensoren, völlig unterschiedliche Temperaturmesswerte erzielt werden, die die in die Kompensation von Temperatureffekte bei der Bestimmung der physikalischen Parameter zu falschen Ergebnissen führen können. Denn wie bereits oben erwähnt, gehen die beiden Temperaturmesswerte in Gestalt einer mittleren Medientemperatur $T_m$ ein in die Bestimmung der Dichte $\rho$ des Mediums gemäß:

$$\rho = C_{0i} + C_{1i}\, f_i^{-2} + C_{2i}\, T_m\, f_i^{-2} + C_{3i}\, T_3\, f_i^{-2}.$$

Insofern, vibronische Messaufnehmer in unterschiedlichen Einbaulagen bezüglich Der Erdbeschleunigung g betrieben werden, ist eine entsprechende Vielfalt von Temperaturverteilungen gegeben, welche die Temperaturmessung zur Lotterie werden lässt, wenn die Sensorposition diesen Effekt nicht berücksichtigt.

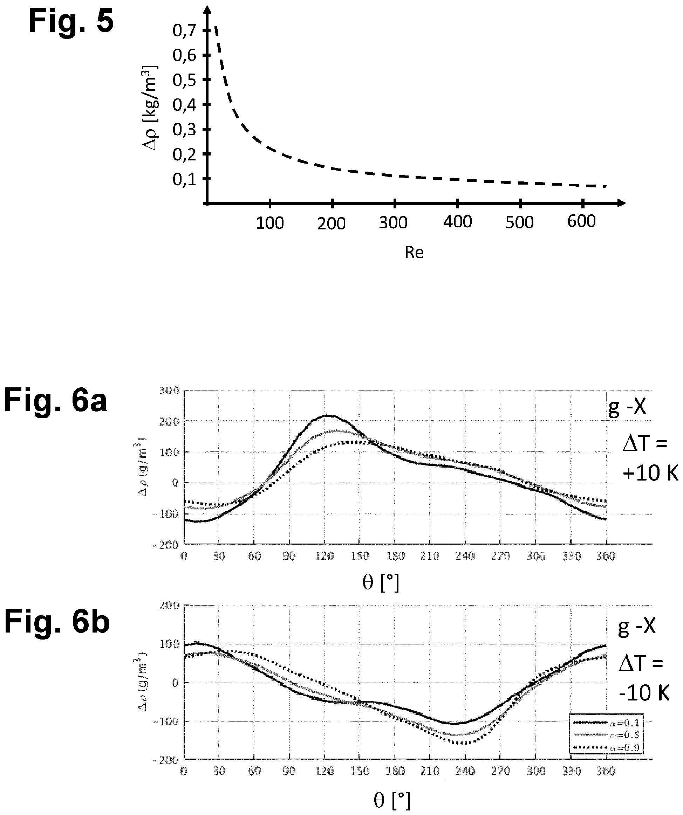

Der maximale Betrag des Fehlerbeitrags dieses Effekts für die Dichtemessung ist in Fig. 5. dargestellt. Hierbei wurden die Positionen der Temperatursensoren im Bereich von $0 \leq \alpha \leq 1$ und $0° \leq \theta \leq 360°$ variiert, und der jeweilige Dichtefehler in Einbaulagen mit der Erdbeschleunigung g in Richtung +Y, -Y, +X und -X für Temperaturunterschiede von $\Delta T = + 10$ K und $\Delta T = - 10$ K berechnet. Der Fehler ergibt sich durch Vergleich der tatsächlichen Mediendichte mit der gemäß der obigen Gleichung bestimmten Mediendichte. Aus Fig. 5 geht hervor, dass der Fehler bei größeren Reynoldszahlen keine große Bedeutung hat, weil sich dort kaum ausgeprägt inhomogene Temperaturverteilungen ausprägen. Insofern kann der Effekt leicht der Aufmerksamkeit entgehen. Jedoch gewinnt er desto mehr an Bedeutung, je kleiner die Reynoldszahlen Re werden.

In Fign. 6a und 6b ist der Dichtemessfehler $\Delta\rho$ bei Re = 20 bei $\Delta T = + 10$ K bzw. $\Delta T = - 10$ K als Funktion der Position $\theta$ der Temperatursensoren bei $\alpha = 0,1$, $\alpha = 0,5$ und $\alpha = 0,9$ dargestellt. Die Einbaulage entspricht hier jener, die den Temperaturverteilungen in Fign. 4a und 4b zugrunde liegt, also jener, mit der Erdbeschleunigung g in Richtung -X.

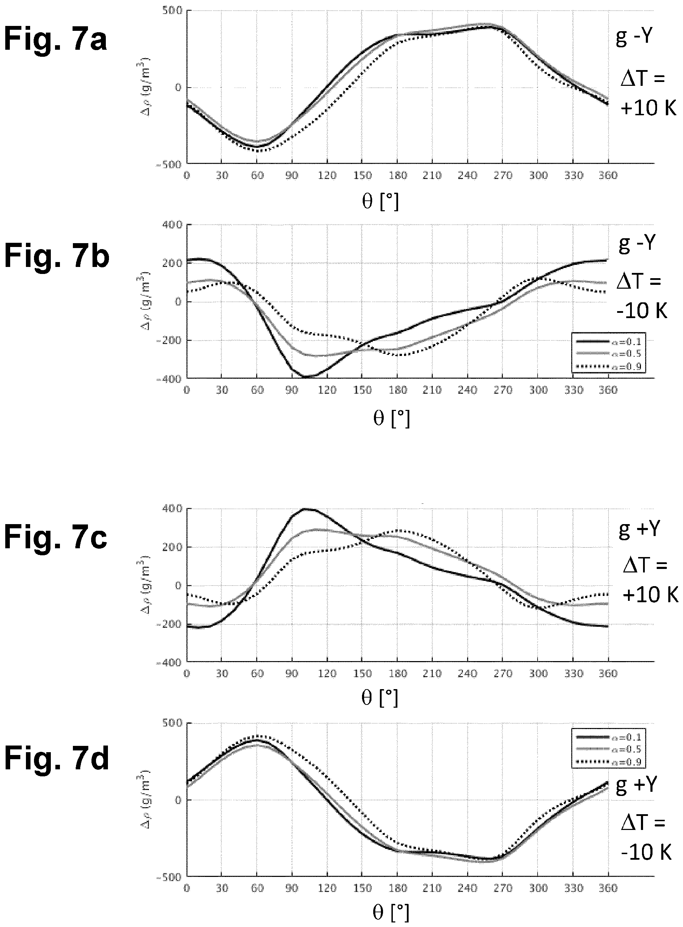

In Fign. 7a bis 7d ist der Dichtemessfehler $\Delta\rho$ bei Re = 20 bei $\Delta T = + 10$ K bzw. $\Delta T = - 10$ K als Funktion der Position $\theta$ der Temperatursensoren bei $\alpha = 0,1$, $\alpha = 0,5$ und $\alpha = 0,9$ dargestellt. Die Einbaulage des Messaufnehmers für die Berechnung zu Fign. 7a und 7b weist einen aufrecht stehenden Messrohrbogen auf, so dass die Erdbeschleunigung g in Richtung -Y weist. Für die Berechnungen zu Fign. 7c und 7d ist der Messrohrbogen entgegengesetzt orientiert, so dass die Erdbeschleunigung g in Richtung +Y weist.

Nach Analyse der Daten, wie sie in Fign. 6a, 6b und 7a bis 7d dargestellt sind, ergibt sich, dass der Bereich um $\theta = 310°$ $\pm$ eines Toleranzbereichs von beispielsweise 30° zu einer erheblichen Reduzierung des maximalen Dichtefehlers führt, der sich bei den unterschiedlichen Einbaulagen und wechselnden Vorzeichen der Temperaturdifferenz $\Delta T$ ergibt. Die Wahl der Position der Temperatursensoren in Längsrichtung wirkt sich auch auf den Messfehler aus, wenngleich der Effekt nicht ganz so stark ausgeprägt ist. Es erweist sich als vorteilhaft, wenn die Temperatursensoren etwa in der Mitte der Geraden Abschnitte der Messrohre angeordnet sind, also etwa bei $\alpha = 0,35$, dies ist jedoch zur Realisierung der Erfindung nicht zwingend erforderlich.

**Patentansprüche**

**1.** Vibronischer Messaufnehmer (100) zum Bestimmen mindestens eines physikalischen Parameters eines strömungsfähigen Mediums, umfassend:

mindestens einen Oszillator, der ein erstes, in Ruhelage gebogenes Messrohr (110a) zum Führen des Mediums und ein zweites, in Ruhelage gebogenes Messrohr (110b) zum Führen des Mediums sowie mindestens einen ersten Koppler (132) und einen zweiten Koppler (132) aufweist, wobei die Messrohre (110a, 110b) mittels des ersten Kopplers und des zweiten Kopplers miteinander verbunden sind, wobei sich zwischen den Kopplern jeweils ein schwingfähiger Abschnitt der Messrohre erstreckt;

mindesten einen Erreger (140) zum Anregen mindestens einer Biegeschwingungsnutzmode des Oszillators, bei welcher die schwingfähigen Abschnitte der Messrohre (110a, 110b) gegeneinander schwingen;

mindesten einen Schwingungssensor (142) zum Erfassen von Schwingungen des Oszillators, zumindest in der Biegeschwingungsnutzmode, und zum Ausgeben von schwingungsabhängigen Signalen;

einen ersten Temperatursensor (200a), der am ersten Messrohr (110a) angeordnet ist, um ein erstes Temperaturmesssignal auszugeben, das von einer Temperatur an einem ersten von dem ersten Temperatursensor (200) kontaktierten Oberflächenabschnitt des ersten Messrohrs (110a) abhängt;

einen zweiten Temperatursensor (200b), der am zweiten Messrohr (110b) angeordnet ist, um ein zweites Temperaturmesssignal auszugeben, das von einer Temperatur an einem zweiten von dem zweiten Temperatursensor kontaktierten Oberflächenabschnitt des zweiten Messrohrs (110b) abhängt; und

eine Betriebs- und Auswerteschaltung (250), die eingerichtet ist zum Treiben des Erregers (140), zum Empfangen der schwingungsabhängigen Signale des Schwingungssensors (142) sowie des ersten und zweiten Temperaturmesssignals sowie zum Bestimmen einer Schwingungsfrequenz zumindest einer Biegeschwingungsnutzmode des Oszillators anhand der schwingungsabhängigen Signale des Schwingungssensors und zum Bestimmen des mindestens einen physikalischen Parameters des Mediums in Abhängigkeit einer für den Parameter charakteristischen Schwingungseigenschaft des Oszillators sowie von dem ersten und zweiten Temperaturmesssignal;

wobei der Messaufnehmer eine zwischen den beiden Messrohren verlaufende Längssymmetrieebene ($S_{yz}$) aufweist, bezüglich welcher die beiden Messrohre zumindest zwischen dem ersten Koppler und dem zweiten Koppler zueinander symmetrisch verlaufen,

wobei der Messaufnehmer eine senkrecht zur Längssymmetrieebene ($S_{yz}$) verlaufende Quersymmetriebene ($S_{xy}$) aufweist, bezüglich welcher die beiden Messrohre (110a, 110b) zumindest zwischen dem ersten Koppler (142) und dem zweiten Koppler (142) jeweils einen spiegelsymmetrischen Verlauf aufweisen;

wobei die Temperatursensoren (200a, 200b) beabstandet zur Quersymmetrieebene (Qxy) angeordnet sind;

wobei ein erster Flächenschwerpunkt des ersten Oberflächenabschnitts und ein zweiter Flächenschwerpunkt des zweiten Oberflächenabschnitts bezüglich einer Schnittgeraden (y) zwischen der Längssymmetrieebene ($S_{yz}$) und der Quersymmetrieebene ($S_{xy}$) zueinander rotationssymmetrisch sind;

wobei der erste Flächenschwerpunkt in einer senkrecht zu einer Messrohrmittenline des ersten Messrohrs verlaufenden ersten Schnittebene liegt, wobei in der ersten Schnittebene eine Winkelkoordinate $\theta$ bezüglich des Schnittpunkts der Messrohrmittenlinie mit der ersten Schnittebene definiert ist, wobei ein Vektor, der in Richtung $\theta$ = 0° zeigt, ausgehend vom Schnittpunkt der Messrohrmittenlinie mit der ersten Schnittebene in Richtung der Längssymmetrieebene ($S_{yz}$) zeigt und senkrecht zu dieser verläuft, wobei ein Vektor, der in Richtung $\theta$ = 90° zeigt, ausgehend vom Schnittpunkt der Messrohrmittenlinie mit der ersten Schnittebene von der Quersymmetrieebene ($S_{xy}$) weg zeigt;

**dadurch gekennzeichnet,**

**dass** der erste Flächenschwerpunkt bezüglich des Schnittpunks der Messrohrmittenlinie in Richtung eines Winkels im Bereich von $\theta$ = 310° +/- 30° angeordnet ist.

2. Vibronischer Messaufnehmer nach Anspruch 1 wobei der erste Flächenschwerpunkt bezüglich des Schnittpunks der Messrohrmittenlinie in Richtung eines Winkels im Bereich von $\theta$ = 310° +/- 20°, insbesondere $\theta$ = 310° +/- 10° angeordnet ist.

3. Vibronischer Messaufnehmer nach Anspruch 1 oder 2, wobei die Messrohrmittenlinie des ersten Messrohrs zwischen dem ersten Koppler und dem zweiten Koppler eine Länge I aufweist, wobei die erste Schnittebene vom ersten Koppler einen Abstand a aufweist, für den gilt a/I ≤ 0,25, beispielsweise a/I ≤ 0,15, insbesondere a/I ≤ 0,08.

4. Vibronischer Messaufnehmer nach einem der Ansprüche 1 bis 3, wobei die Messrohrmittenlinie des ersten Messrohrs zwischen dem ersten Koppler und dem zweiten Koppler eine Länge I aufweist, wobei die erste Schnittebene vom ersten Koppler einen Abstand a aufweist, für den gilt a/I ≥ 0,01 beispielsweise a/I ≥ 0,02, insbesondere ≥ 0,04.

5. Vibronischer Messaufnehmer nach einem der vorhergehenden Ansprüche, wobei die schwingfähigen Abschnitte der beiden Messrohre jeweils zwei gerade Abschnitt und einen zwischen ihnen liegenden bogenförmigen Abschnitt aufweisen; wobei die erste Schnittebene die Messrohrmittenlinie in einem geraden Abschnitt schneidet.

6. Vibronischer Messaufnehmer nach Anspruch 4 und nach Anspruch 5, wobei die Länge des bogenförmigen Abschnitts nicht weniger als 30% insbesondere nicht weniger als 35% und bevorzugt nicht weniger als 40% der Länge I beträgt.

7. Vibronischer Messaufnehmer nach einem der vorhergehenden Ansprüche, wobei die Messrohre jeweils einen Innendurchmesser von nicht weniger als 10 mm insbesondere nicht weniger als 12 mm und bevorzugt nicht weniger als 15 mm aufweisen.

8. Vibronischer Messaufnehmer nach einem der vorhergehenden Ansprüche, weiterhin umfassend: einen Trägerkörper wobei, die Messrohre einlaufseitig und auslaufseitig mit dem Trägerkörper biegesteif verbunden sind;

und mindestens einen dritten Temperatursensor zum Erfassen einer Temperatur des Trägerkörpers, und zum Ausgeben eines die Temperatur des Trägerkörpers repräsentierenden dritten Temperaturmesssignals;

wobei die Betriebs- und Auswerteschaltung dazu eingerichtet ist, das dritte Temperaturmesssignal zu empfangen und dieses bei der Ermittlung des mindestens einen physikalischen Parameters des Mediums zu berücksichtigen.

9. Vibronischer Messaufnehmer nach einem der vorhergehenden Ansprüche, wobei der mindestens eine physikalische Parameter eine Dichte des Mediums umfasst, wobei die für den Parameter charakteristischen Schwingungseigenschaft des Oszillators eine Schwingungsfrequenz des Oszillators umfasst.

10. Vibronischer Messaufnehmer nach einem der vorhergehenden Ansprüche, wobei der mindestens eine physikalische Parameter eine Massedurchflussrate des Mediums umfasst, wobei die für den Parameter charakteristischen Schwingungseigenschaft des Oszillators eine Phasendifferenz bzw. Zeitdifferenz zwischen den Signalen eines einlassseitigen Schwingungssensors und eines auslassseitigen Schwingungssensors umfasst.

11. Vibronischer Messaufnehmer nach einem der vorhergehenden Ansprüche, wobei der mindestens eine physikalische Parameter eine Viskosität des Mediums umfasst, wobei die für den Parameter charakteristische Schwingungseigenschaft eine Dämpfung der Schwingung umfasst.

12. Verwenden des vibronischen Messaufnehmers nach einem der vorhergehenden Ansprüche, zum Bestimmen des physikalischen Parameters bei einer Reynoldszahl Re < 500, beispielsweise Re < 200, insbesondere Re < 100.

**Claims**

1. A vibronic measurement sensor (100) for determining at least one physical parameter of a flowable medium, comprising:

   at least one oscillator, which has a first measuring tube (110a) curved in the rest position and configured to convey the medium, and a second measuring tube (110b) curved in the rest position and configured to convey the medium, and also at least one first coupler (132) and a second coupler (132), wherein the measuring tubes (110a, 110b) are connected to each other by means of the first coupler and the second coupler, wherein an oscillatable portion of the measuring tubes extends between the couplers;
   at least one exciter (140) configured to excite at least one useful flexural vibration mode of the oscillator in which the oscillatable portions of the measuring tubes (110a, 110b) oscillate counter to each other;
   at least one vibration sensor (142) configured to detect vibrations of the oscillator, at least in the useful flexural vibration mode, and to output vibration-dependent signals;
   a first temperature sensor (200a), which is arranged on the first measuring tube (110a), in order to output a first temperature measurement signal that depends on a temperature at a first surface portion of the first measuring tube (110a) contacted by the first temperature sensor (200);
   a second temperature sensor (200b), which is arranged on the second measuring tube (110b), in order to output a second temperature measurement signal that depends on a temperature at a second surface portion of the second measuring tube (110b) contacted by the second temperature sensor; and
   an operating and evaluation circuit (250), which is configured to drive the exciter (140), to receive the vibration-dependent signals of vibration sensor (142) and of the first and second temperature measurement signal, and also to determine a vibration frequency of at least one useful flexural vibration mode of the oscillator on the basis of the vibration-dependent signals of the vibration sensor, and to determine the at least one physical parameter of the medium depending on a vibration property of the oscillator that is characteristic of the parameter and also the first and second temperature measurement signal;
   wherein the measurement sensor has, running between the two measuring tubes, a longitudinal plane of symmetry ($S_{yz}$), relative to which the two measuring tubes run symmetrically relative to each other, at least between the first coupler and the second coupler,
   wherein the measurement sensor has, running perpendicular to the longitudinal plane of symmetry ($S_{yz}$), a transverse plane of symmetry ($S_{xy}$), relative to which the two measuring tubes (110a, 110b) each have a mirror-symmetrical course at least between the first coupler (142) and the second coupler (142);
   wherein the temperature sensors (200a, 200b) are arranged at a distance from the transverse plane of symmetry (Qxy);
   wherein a first centroid of the first surface portion and a second centroid of the second surface portion are rotationally symmetrical with respect to each other, relative to an intersection line (y) between the longitudinal plane of symmetry ($S_{yz}$) and the transverse plane of symmetry ($S_{xy}$);
   wherein the first centroid is in a first plane of section running perpendicular to a measuring tube center line of the first measuring tube, wherein in the first plane of section an angle coordinate θ is defined relative to the intersection point of the measuring tube center line with the first plane of section, wherein a vector pointing in a direction θ=0°, starting from the intersection point of the measuring tube center line with the first plane of section, points in the direction of the longitudinal plane of symmetry ($S_{yz}$) and runs perpendicular thereto, wherein a vector pointing in a direction θ=90°, starting from the intersection point of the measuring tube center line with the first plane of section, points away from the transverse plane of symmetry ($S_{xy}$);
   wherein
   the first centroid is arranged in the direction of an angle in the range of θ=310° +/-30° relative to the intersection point of the measuring tube center line.

2. The vibronic sensor as claimed in claim 1, wherein the first centroid is arranged in the direction of an angle in the range of θ=310° +/-20°, in particular θ=310° +/-10° relative to the intersection point of the measuring tube center line.

3. The vibronic sensor as claimed in claim 1 or 2, wherein the measuring tube center line of the first measuring tube has a length 1 between the first coupler and the second coupler, wherein the first plane of section has a distance a from the first coupler for which all ≤ 0.25, for example all ≤ 0.15, in particular all ≤ 0.08.

4. The vibronic sensor as claimed in any one of claims 1 to 3, wherein the measuring tube center line of the first measuring tube has a length 1 between the first coupler and the second coupler, wherein the first plane of section has a distance a from the first coupler for which all ≥ 0.01, for example all ≥ 0.02, in particular ≥ 0.04.

5. The vibronic sensor as claimed in any one of the preceding claims, wherein the oscillatable portions of the two measuring tubes each have two straight portions and one arcuate portion lying between the two straight portions; wherein the first plane of section intersects the measuring tube center line in a straight portion.

6. The vibronic sensor as claimed in claim 4 and as claimed in claim 5, wherein the length of the arcuate portion is not less than 30%, in particular not less than 35%, and preferably not less than 40% of the length 1.

7. The vibronic sensor as claimed in any one of the preceding claims, wherein the measuring tubes each have an inner diameter of not less than 10 mm, in particular not less than 12 mm, and preferably not less than 15 mm.

8. The vibronic sensor as claimed in any one of the preceding claims further comprising: a carrier body, wherein the measuring tubes are connected to the carrier body in a flexurally rigid manner at an inlet end and at an outlet end;

and at least one third temperature sensor configured to detect a temperature of the carrier body and to output a third temperature measurement signal representing the temperature of the carrier body; wherein the operating and evaluation circuit is configured to receive the third temperature measurement signal and to take it into consideration when determining the at least one physical parameter of the medium.

9. The vibronic sensor as claimed in any one of the preceding claims, wherein the at least one physical parameter comprises a density of the medium, wherein the vibration property of the oscillator that is characteristic of the parameter comprises a vibration frequency of the oscillator.

10. The vibronic sensor as claimed in any one of the preceding claims, wherein the at least one physical parameter comprises a mass flow rate of the medium, wherein the vibration property of the oscillator that is characteristic of the parameter comprises a phase difference or time difference between the signals of an inlet-end vibration sensor and an outlet-end vibration sensor.

11. The vibronic sensor as claimed in any one of the preceding claims, wherein the at least one physical parameter comprises a viscosity of the medium, wherein the vibration property that is characteristic of the parameter comprises an attenuation of the oscillation.

12. Use of the vibronic sensor as claimed in any one of the preceding claims for determining the physical parameter at a Reynolds number Re < 500, for example Re < 200, in particular Re < 100.

**Revendications**

1. Capteur vibronique (100) destiné à la détermination d'au moins un paramètre physique d'un produit apte à s'écouler, lequel capteur comprend :

au moins un oscillateur, lequel présente un premier tube de mesure (110a) courbé en position de repos et destiné à guider le produit, et un deuxième tube de mesure (110b) courbé en position de repos et destiné à guider le produit, ainsi qu'au moins un premier coupleur (132) et un deuxième coupleur (132), les tubes de mesure (110a, 110b) étant reliés l'un à l'autre au moyen du premier coupleur et du deuxième coupleur, une section apte à vibrer des tubes de mesure s'étendant respectivement entre les coupleurs ; au moins un excitateur (140) destiné à exciter au moins un mode utile de vibration de flexion de l'oscillateur, mode dans lequel les sections vibrantes des tubes de mesure (110a, 110b) vibrent les unes par rapport aux autres ; au moins un capteur de vibrations (142) destiné à mesurer les vibrations de l'oscillateur, au moins dans le mode utile de vibrations de flexion, et destiné à émettre des signaux dépendant des vibrations ; un premier capteur de température (200a) disposé sur le premier tube de mesure (110a), lequel capteur est destiné à émettre un premier signal de mesure de température qui dépend d'une température sur une première partie de surface du premier tube de mesure (110a) en contact avec le premier capteur de température (200) ;

un deuxième capteur de température (200b) disposé sur le deuxième tube de mesure (110b), lequel capteur est destiné à émettre un deuxième signal de mesure de température qui dépend d'une température sur une deuxième partie de surface du deuxième tube de mesure (110b) en contact avec le deuxième capteur de température ; et

un circuit d'exploitation et d'évaluation (250), lequel est conçu pour commander l'excitateur (140), pour recevoir les signaux dépendant des vibrations du capteur de vibrations (142) ainsi que le premier et le deuxième signal de mesure de température, ainsi que pour déterminer une fréquence de vibration d'au moins un mode utile de vibration de flexion de l'oscillateur à l'aide des signaux dépendant des vibrations du capteur de vibrations et pour déterminer l'au moins un paramètre physique du produit en fonction d'une propriété de vibration de l'oscillateur caractéristique du paramètre ainsi que du premier et du deuxième signal de mesure de température ;

le capteur présentant un plan de symétrie longitudinal ($S_{yz}$) s'étendant entre les deux tubes de mesure, plan par rapport auquel les deux tubes de mesure s'étendent symétriquement l'un par rapport à l'autre au moins entre le premier coupleur et le deuxième coupleur,

le capteur présentant un plan de symétrie transversal ($S_{xy}$) s'étendant perpendiculairement au plan de symétrie longitudinal ($S_{yz}$), plan par rapport auquel les deux tubes de mesure (110a, 110b) présentent chacun un tracé selon une symétrie spéculaire, au moins entre le premier coupleur (142) et le deuxième coupleur (142) ;

les capteurs de température (200a, 200b) étant disposés à distance du plan de symétrie transversal ($Q_{xy}$) ;

un premier centre de gravité de surface de la première section de surface et un deuxième centre de gravité de surface de la deuxième section de surface étant symétriques en rotation l'un par rapport à l'autre par rapport à une droite d'intersection (y) entre le plan de symétrie longitudinal ($S_{yz}$) et le plan de symétrie transversal ($S_{xy}$) ;

le premier centre de gravité de surface étant situé dans un premier plan de coupe s'étendant perpendiculairement à une ligne médiane du premier tube de mesure, une coordonnée angulaire $\theta$ étant définie dans le premier plan de coupe par rapport au point d'intersection de la ligne médiane du tube de mesure avec le premier plan de coupe, un vecteur qui pointe dans la direction $\theta$ = 0° pointant en direction du plan de symétrie longitudinal ($S_{yz}$) à partir du point d'intersection de la ligne médiane du tube de mesure avec le premier plan de coupe et s'étendant perpendiculairement à ce plan, un vecteur qui pointe en direction $\theta$ = 90° pointant à l'opposé du plan de symétrie transversal ($S_{xy}$) à partir du point d'intersection de la ligne médiane du tube de mesure avec le premier plan de coupe ;

**caractérisé**
**en ce que** le premier centre de gravité de surface est disposé par rapport au point d'intersection de la ligne médiane du tube de mesure dans la direction d'un angle situé dans la plage $\theta$ = 310° +/- 30°.

2. Capteur vibronique selon la revendication 1, pour lequel le premier centre de gravité de surface est disposé par rapport au point d'intersection de la ligne médiane du tube de mesure dans la direction d'un angle dans la plage $\theta$ = 310° +/- 20°, notamment $\theta$ = 310° +/- 10°.

3. Capteur vibronique selon la revendication 1 ou 2, pour lequel la ligne médiane du premier tube de mesure entre le premier coupleur et le deuxième coupleur présente une longueur l, le premier plan de coupe présentant une distance a par rapport au premier coupleur, pour laquelle s'applique la relation suivante : a/l ≤ 0,25, par exemple a/l ≤ 0,15, notamment a/l ≤ 0,08.

4. Capteur vibronique selon l'une des revendications 1 à 3, pour lequel la ligne médiane du premier tube de mesure entre le premier coupleur et le deuxième coupleur présente une longueur l, le premier plan de coupe présentant une distance a par rapport au premier coupleur, pour laquelle s'applique la relation suivante : a/l ≥ 0,01 par exemple a/l ≥ 0,02, notamment ≥ 0,04.

5. Capteur vibronique selon l'une des revendications précédentes, pour lequel les parties aptes à vibrer des deux tubes de mesure comprennent chacune deux parties droites et une partie arquée située entre elles ; le premier plan de coupe coupant la ligne médiane du tube de mesure dans une partie droite.

6. Capteur vibronique selon la revendication 4 et selon la revendication 5, pour lequel la longueur de la partie arquée n'est pas inférieure à 30 %, notamment pas inférieure à 35 %, et de préférence pas inférieure à 40 % de la longueur l.

7. Capteur vibronique selon l'une des revendications précédentes, pour lequel les tubes de mesure présentent chacun un diamètre intérieur non inférieur à 10 mm, notamment non inférieur à 12 mm et de préférence non inférieur à 15 mm.

8. Capteur vibronique selon l'une des revendications précédentes, lequel capteur comprend en outre : un corps de support, les tubes de mesure étant reliés, côté entrée et côté sortie, au corps de support de manière rigide en flexion ;

   et au moins un troisième capteur de température conçu pour mesurer une température du corps de support, et pour émettre un troisième signal de mesure de température représentant la température du corps de support ;
   le circuit d'exploitation et d'évaluation étant conçu pour recevoir le troisième signal de mesure de température et pour en tenir compte lors de la détermination d'au moins un paramètre physique du produit.

9. Capteur vibronique selon l'une des revendications précédentes, pour lequel l'au moins un paramètre physique comprend une densité du produit, la propriété vibratoire de l'oscillateur caractéristique pour le paramètre comprenant une fréquence de vibration de l'oscillateur.

10. Capteur vibronique selon l'une des revendications précédentes, pour lequel l'au moins un paramètre physique comprend un débit massique du produit, la propriété vibratoire de l'oscillateur caractéristique pour le paramètre comprenant une différence de phase ou une différence de temps entre les signaux d'un capteur de vibration côté entrée et d'un capteur de vibration côté sortie.

11. Capteur vibronique selon l'une des revendications précédentes, pour lequel l'au moins un paramètre physique comprend une viscosité du produit, la propriété vibratoire caractéristique pour le paramètre comprenant un amortissement de la vibration.

12. Utilisation du capteur vibronique selon l'une des revendications précédentes, en vue de la détermination du paramètre physique dans le cas d'un nombre de Reynolds Re < 500, par exemple Re < 200, notamment Re < 100.

**Fig. 1**

**Fig. 2**

Fig. 3

Fig. 4a $\Delta T = +10$ K

Fig. 4b $\Delta T = -10$ K

**Fig. 5**

**Fig. 6a**

g -X

$\Delta T = +10\ K$

**Fig. 6b**

g -X

$\Delta T = -10\ K$

**Fig. 7a**

g -Y

$\Delta T =$ +10 K

**Fig. 7b**

g -Y

$\Delta T =$ -10 K

**Fig. 7c**

g +Y

$\Delta T =$ +10 K

**Fig. 7d**

g +Y

$\Delta T =$ -10 K

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018007176 A1
- DE 102017106209 A1

- WO 2008064459 A1